# EUROPEAN PATENT SPECIFICATION

(11) **EP 1 658 748 B1**
(45) Date of publication and mention of the grant of the patent: **02.12.2009**
(21) Application number: 04732906.5
(22) Date of filing: 14.05.2004
(51) Int. Cl.: H04W 76/02

(54) **Methods of determining the status of a requested service, corresponding mobile station and computer-readable medium**
Verfahren zur Bestimmung des Zustandes eines angeforderten Dienstes, Mobilstation dafür und computerlesbares Speichermedium
Procédés de détermination de l'état d'un service demandé, station mobile correspondante et support lisible par un ordinateur

(30) Priority: 14.05.2003 EP 03252988
(43) Date of publication of application: 24.05.2006
(73) Proprietor: Research In Motion Limited, Waterloo, Ontario N2L 3W8 (CA)
(72) Inventor: ISLAM, M., Khaledul, Kanata, Ontario K2K 3N4 (CA); HOSSAIN, Asif, Kanata, Ontario K2K 3H9 (CA); WILLEY, William, Daniel, San Francisco, CA 94109 (US)
(74) Representative: Patel, Binesh
(86) International application number: PCT/CA2004/000738
(87) International publication number: WO 2004/103003

(56) References cited:
- WO-A-01/52574
- US-A1- 2002 065 067
- US-A1- 2002 068 586

## Description

### CROSS REFERENCE TO RELATED APPLICATION

N/A

### BACKGROUND

### TECHNICAL FIELD

This application relates to mobile communication techniques in general, and to an apparatus and method of network-directed service status in particular.

### DESCRIPTION OF THE RELATED ART

In known code division multiple access (CDMA) based networks, a base station BS) may send a Release Order on Paging Channel (PCH) to a mobile station (MS) to indicate a variety of things. However, the MS can't unambiguously decide what the intention of Release Order really is, except perhaps for the Service Option Reject Release Order as specified in IS-2000.5. The Release on PCH is typically sent to save network resources e.g. when the network deems that there is no need to allocate traffic channel resources. If the intention of the release order is not clear enough to the MS, then it may not serve the intended purpose. In some cases, it may make things even worse e.g. MS may initiate retry efforts which defeats the purpose of the Release on PCH.

Two examples of the problem described above may be observed on current CDMA-based networks.

First, if mobile-originated (MO) short messaging service (SMS) is not allowed and the MS makes an origination attempt indicating SMS service option, then the BS sends release order on PCH without granting traffic channel. This would be the case when MS is not provisioned for MO SMS or when the MS moves to a foreign network that does not allow it to send SMS. However the MS is unable to determine the actual cause of release from the received information and may even retry a number of times. In addition, MS may not be able to show the exact reason for the failure to the user.

Second, a packet data capable MS is required to "reconnect" its dormant session whenever there is a change in System identifier (SID), Network identifier (NID) or Packet zone Identifier (PID) as specified in IS-707. If the MS simply crosses the BS boundary, but is still within the scope of serving Packet Data Service Node (PDSN), then there is no need to renegotiate the point-to-point protocol (PPP) connectivity. When the MS sends packet data origination with (Data Ready to Send) DRS field set to 0 (i.e. MS has no real data to send), the BS as per some implementations, may send Release Order on PCH while with other implementations, the BS will bring the MS all the way to traffic state just to indicate that the reconnect was successful.
US 2002/0065067 A1 relates to a method for determining whether data service connectivity is supported in a wireless communication system. A MS originates a call requesting electronic data transmission services to a base station, which responds in one of three ways: (1) a channel assignment, in which case the MS is brought to traffic state; (2) a release order specifying that the requested service option is not supported: or (3) a release order with no reason specified.

When reconnects are brought all the way to the traffic state, just to mean that the attempt was unsuccessful, this may waste traffic channel resources, and cause undesired battery drainage due to traffic state.

The present invention is set out in the independent claims. Some optional features are set out in the claims dependent thereto.

According to a first aspect of the invention, there is provided a method of communicating over a wireless communications network with a mobile station, comprising the steps of: (a) from the mobile station receiving an origination request over the network, requesting a service with the network; and (b) in response to the origination request, transmitting to the mobile station over the network a status message of a status of the requested service, said status message unambiguously identifying one of a grant of the requested service and a denial of the requested service and a reason for the denial of the requested service.

In one implementation, the status message is transmitted to the mobile station over a control channel of the network. The communications network comprises a CDMA network, and the origination request receiving step comprises receiving the origination request from one of a dormant state and an idle state of the mobile station. The origination request receiving step may also involve receiving the origination request from the one state in response to a change in a network parameter detected at the mobile station.
The status message may comprise a release order message having a service order qualifier, the service order qualifier identifying the reason for the service denial.

According to a second aspect of the invention, there is provided a mobile station for communicating over a wireless communications network. The mobile station includes a service call state machine that is configured to perform the steps of: (a) facilitating transmission over the network of an origination request requesting a service with the network, by transitioning from an originating state from which the transmission is initiated to a service state associated with the requested service; (b) in the service state, receiving over the network, in response to the origination request, a status message of a status of the requested service, said status message unambiguously identifying one of a grant of the requested service and a denial of the requested service and a reason for the denial of the requested service, and (c) transitioning from the service state to one of the originating state and a null state in accordance with the received status message.

Other aspects and features of the invention will become apparent to those ordinarily skilled in the art upon review of the following description.

### BRIEF DESCRIPTION OF THE DRAWINGS

Embodiments of the invention will now be described, by way of example only, with reference to the attached figures, wherein:
FIG. 1 illustrates an embodiment of an apparatus provided in accordance with the present invention;
FIG. 2 illustrates a packet data service call control state machine provided in accordance with the present invention;
FIG. 3 illustrates a circuit-switched service call control state machine provided in accordance with the present invention;
FIG. 4 is an interaction diagram illustrating the operation of the present invention; and
FIG. 5 is a block diagram illustrating a mobile station according to the present invention.

Same reference numerals are used in different figures to denote similar elements.

### DETAILED DESCRIPTION OF THE PREFERRED EMBODIMENTS

According to the present invention there are provided techniques that may enable Release Order in Paging Channel with 'meaningful ORDQ' to unambiguously indicate whether the reconnect was successful or failed. These meaningful types of Release Orders are hereinafter referred to as Service Release orders so as to better differentiate them from known Release Orders.

Additional order qualification codes (ORDQ) are provided to explicitly indicate the cause of the Service Release Order. The following new ORDQ values are proposed for Release order (ORDER = 010101):

- ORDQ = 00000100 (indicates that requested 'service is denied')

- ORDQ = 00000101 (indicates that requested 'service is granted')

The proposed values for the ORDQ parameter are illustrative only, and are not meant to limit the scope of the present invention, but includes all alternate values for the ORDQ Release parameter that could be used in a Service Release Order, the selection of which would be apparent to a person of ordinary skill in the art to which this invention. Furthermore, it is envisaged that the actual number assigned to each ORDQ may vary with the version of the CDMA based network in which the present invention are used.

Advantageously, according to the present invention, the network is enabled to send a release order with ORDQ = 'service is denied' when an MS is to be told that the requested service is denied by the network. For successful reconnect in packet data service, the network sends a release order with ORDQ = 'service is granted' on the paging channel when a MS is to be told that the requested 'service is granted'.

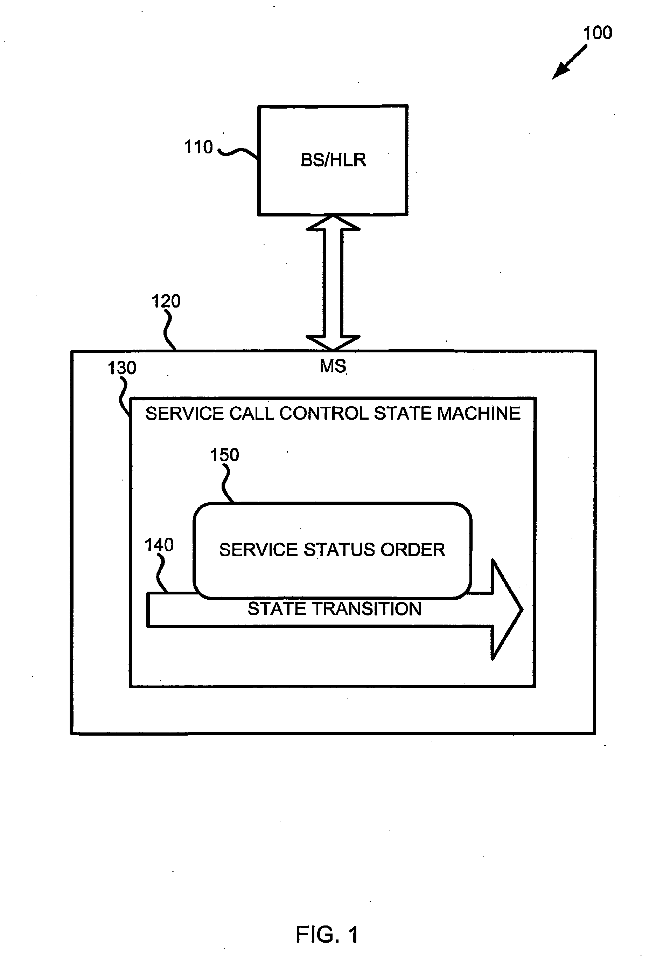

Referring to the drawings, FIG. 1 illustrates an embodiment of an apparatus provided in accordance with the present invention. A code division multiple access-based network 100 is provided with a Base Station/Home Location Register BS/HLR 110 adapted to communicate with a mobile station MS 120. MS 120 includes a service call control state machine 130 having at least one state transition 140 which is triggered by a Service Status Order 150, such as a Service Release Order which has an ORDQ value equal to one of 'SERVICE DENIED' and 'SERVICE GRANTED'.

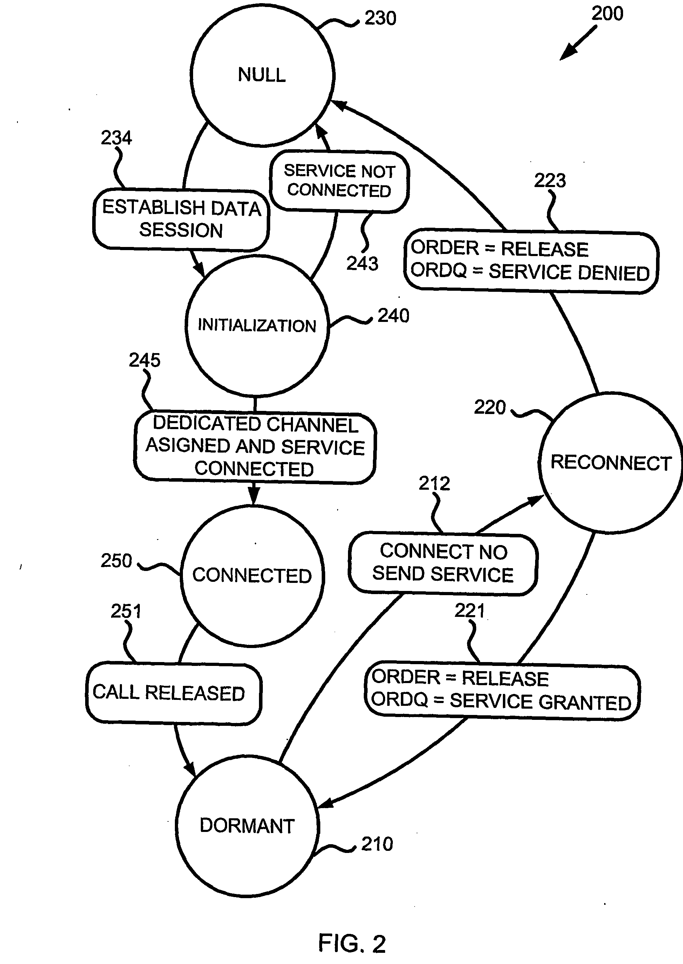

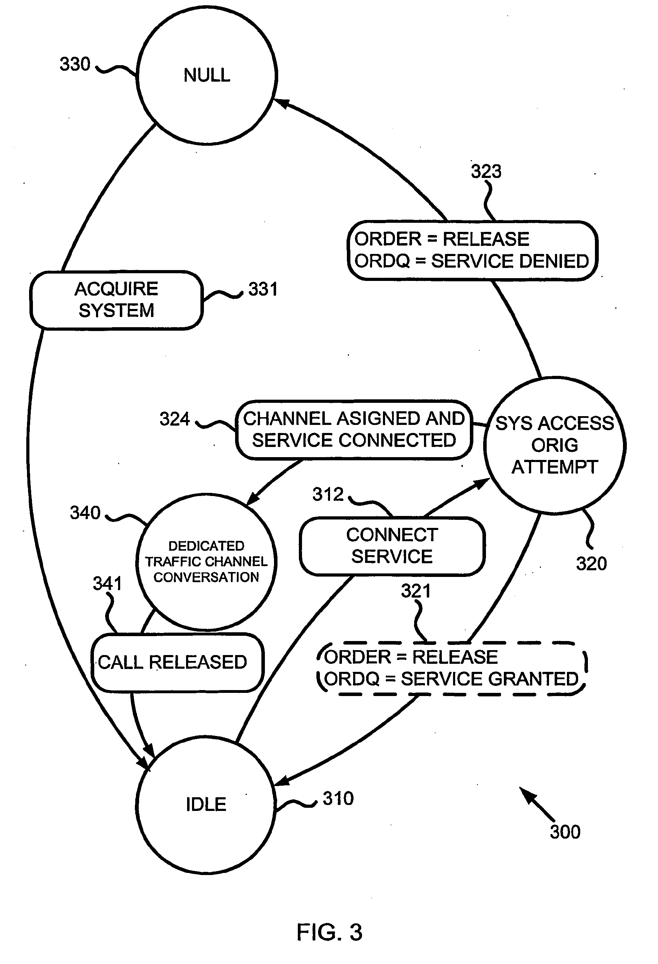

It is envisaged that in specific embodiments, the service call control state machine be adapted to the specific requirements of the CDMA based network and mobile stations in which the present invention are used. For example, in IS-2000 CDMA based networks and mobile stations that use packet data services, the state machine of FIG. 2 can be used at the mobile station, whereas in IS-2000 CDMA based networks and mobile stations that use circuit-switched services, the state machine of FIG. 3 can be used at the mobile station, and in IS-2000 CDMA based networks and mobile stations that use both packet data and circuit-switched services, both the state machines of FIG. 2 and FIG. 3 can be provided at the mobile station.

Turning now to FIG. 2, FIG. 2 illustrates a packet data service call control state machine provided in accordance with the present invention. The state machine 200 includes a dormant state 210, a reconnect state 220, a null state 230, an initialization state 240, a connected state 250, and two transitions 221,223 which are triggered by Service Status Orders, provided by Release Orders having a service status order qualification code.

Consider a MS which is initially in dormant state 210. Then, for example, the MS may need to reconnect when the serving SID, NID or PID has changed, but it may have no data to send. Advantageously, the MS transitions from dormant state 210 to reconnect state 220 via CONNECT NO SEND SERVICE 212 transition. In reconnect state 220, the MS attempts to reconnect service even though MS has no data to send, for instance by sending an origination request and awaiting for a Service Release Order provided by the network in accordance to the present invention.

Further advantageously, while in reconnect 220 state, upon reception of a Service Release Order, either one of 'SERVICE GRANTED' 221 or 'SERVICE DENIED' 223 Service Release Orders on the paging channel, the state transitions from reconnect 220 to one of either dormant 210 or null 230 respectively.

On one hand, by taking the 'Service Granted' transition to reach the dormant state, the MS is enabled to go dormant since the network sent a service release order on the paging channel indicating service is granted. There is no need for the network or the MS to go through the dedicated traffic, such as through transition 245.

On the other hand, by taking the 'Service Denied' 223 transition to reach the null state, the MS is enabled to deactivate packet data since the network sent a service release order on the paging channel indicating service is not granted. If the MS desires to remain always connected, it transitions from the null state 230 to the initialization state 240 via the ESTABLISH DATA SESSION 234 transition, for instance when the serving SID, NID or PID changes. From the initialization state 240, the state may transition back to null 230 via the SERVICE NOT CONNECTED 243 transition, for example if packet data service is deactivated when the service option is not connected. However, if the packet data service is activated, then the state transitions from initialization 240 to connected 250 via the DEDICATED CHANNEL ASSIGNED AND SERVICE CONNECTED 245 transition. While in the connected 250 state, the MS may go to the dormant 210 state via CALL RELEASED 251 transition, for example if the MS still has no data to send.

Turning now to FIG. 3, FIG. 3 illustrates a circuit-switched service call control state machine provided in accordance with the present invention. The state machine 300 includes an idle state 310, a system access origination attempt state 320, a null state 330, a dedicated traffic channel conversation state 340, and two transitions 321, 323 which are triggered by Service Status Orders, provided by Release Orders having a service status order qualification code.

Consider a MS which is initially in idle state 310. Then, for example, the MS may need to originate when the user places a call. Advantageously, the MS transitions from idle state 310 to system access origination state 320 via CONNECT SERVICE 312 transition. In system access origination attempt state 320, the MS attempts to originate service, for instance by sending an origination request and awaiting for a Service Status Order provided in a Release Order having a service status order qualification code in accordance to the present invention.

Further advantageously, while in system access origination attempt 320 state, upon reception of a Service Release Order, either one of 'SERVICE GRANTED' 321 or 'SERVICE DENIED' 323 Service Release Orders, the state transitions from system access origination attempt 320 to one of either idle 310 or null 330 respectively. However, the 'SERVICE GRANTED' 321 transition will only be taken in the case of circuit-switched data service, whereas the 'SERVICE DENIED' 323 transition can be taken for all manner of circuit switched service, including but not limited to circuit-switched data service, voice service, and short messaging service (SMS).

On one hand, by taking the 'Service Granted' transition to reach the idle state, for example in the case of circuit-switched data, the MS is enabled to go idle since the network sent a service release order on the paging channel indicating service is granted. This can be advantageous when the MS had no data to send, as this enables the MS to avoid having to the dedicated transition to the traffic channel conversation state 330 prior to the idle state 310 via the channel assigned and service connected transition 324.

On the other hand, by taking the 'Service Denied' transition to reach the null state, the MS is enabled to deactivate circuit switched service since the network sent a service release order on the paging channel indicating service is not granted. If the MS desires to connect, it transitions from the null state 330 to the idle state 310 via the ACQUIRE A SYSTEM 331 transition, and then transitions to the system access origination state 320 via the CONNECT SERVICE 312 transition when it enters a new system. From the system access origination state 320, if the circuit switched service is activated, then the state transitions from system access origination attempt state 320 to the dedicated traffic channel conversation state 340 via the CHANNEL ASSIGNED AND SERVICE CONNECTED 324 transition. While in the dedicated traffic channel conversation 340 state, the MS may go to the idle 310 state via CALL RELEASED 341 transition.

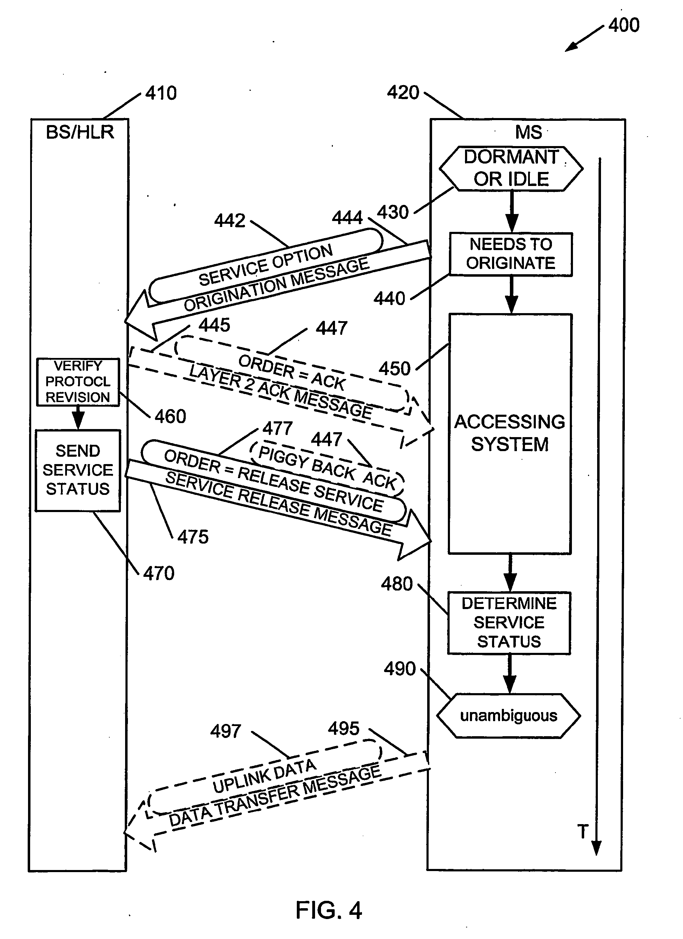

Turning now to FIG. 4, FIG. 4 is an interaction diagram illustrating the operation of the present invention. In the interaction diagram 400, MS 420 begins in either dormant or idle state 430. Then, at step 440, the MS 420 needs to originate, for instance because the SID, NID or PID of the current system has changed, or the user wants to place a call such as using SMS. As a result, an origination message 444 having a service option 442 is sent from MS 420 towards BS/HLR 410. Depending on the implementation, BS/HLR 410 may or may not send back a layer 2 ACK message 445 having an ACK order 447, as this ACK may be piggy backed onto the next message. Regardless, at step 460 the BS/HLR verifies the PROTOCOL REVISION number of the MS 420, for instance by obtaining the PROTOCOL REVISION NUMBER from the origination message 444. If the PROTOCOL REVISION is greater or equal to a predetermined value, then MS 420 supports the Service Status Order provided according to the present invention, and a Service Release Message 475 having a RELEASE SERVICE order 477 is sent 470 while the MS is accessing system 450. Depending on the implementation, and whether or not layer 2 ACK message 445 was sent, service release message 475 may include piggy back ACK 478. Upon reception of the service release message 475, the MS 420 at step 480 determines the service status, i.e. whether the service was granted or released, after which the MS 420 transitions to an unambiguous state 490, such as the null, idle, or dormant states for example.

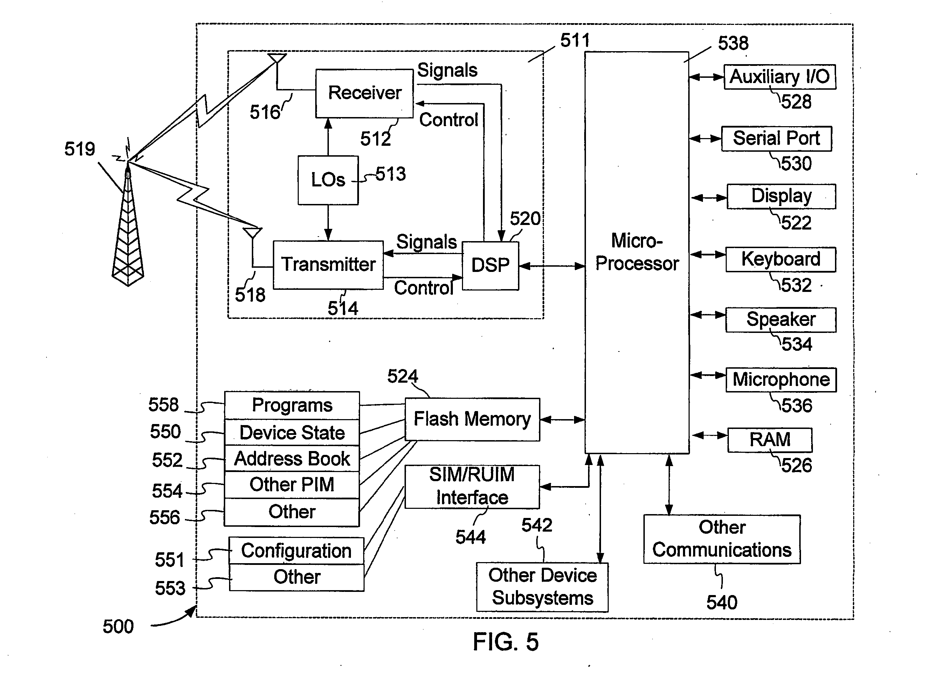

Turning now to FIG. 5, FIG. 5 is a block diagram illustrating a mobile station including preferred embodiments of the apparatus and method of the current invention. Mobile station 500 is preferably a two-way wireless communication device having at least voice and data communication capabilities. Mobile station 500 preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile station 500 is enabled for two-way communication, it will incorporate a communication subsystem 511, including both a receiver 512 and a transmitter 514, as well as associated components such as one or more, preferably embedded or internal, antenna elements 516 and 518, local oscillators (LOs) 513, and a processing module such as a digital signal processor (DSP) 520. As will be apparent to those skilled in the field of communications, the particular design of the communication subsystem 511 will be dependent upon the communication network in which the device is intended to operate. For example, mobile station 500 may include a communication subsystem 511 designed to operate within the Mobitex™ mobile communication system, the DataTAC™ mobile communication system, GPRS network, UMTS network, EDGE network or CDMA network.

Network access requirements will also vary depending upon the type of network 519. For example, in the Mobitex and DataTAC networks, mobile station 500 is registered on the network using a unique identification number associated with each mobile station. In UMTS and GPRS networks, and in some CDMA networks, however, network access is associated with a subscriber or user of mobile station 500. A GPRS mobile station therefore requires a subscriber identity module (SIM) card in order to operate on a GPRS network, and a RUIM in order to operate on some CDMA networks. Without a valid SIM/RUIM card, a GPRS/UMTS/CDMA mobile station may not be fully functional. Local or non-network communication functions, as well as legally required functions (if any) such as "911" emergency calling, may be available, but mobile station 500 will be unable to carry out any other functions involving communications over the network 500. The SIM/RUIM interface 544 is normally similar to a card-slot into which a SIM/RUIM card can be inserted and ejected like a diskette or PCMCIA card. The SIM/RUIM card can have approximately 64K of memory and hold many key configuration 551, and other information 553 such as identification, and subscriber related information.

When required network registration or activation procedures have been completed, mobile station 500 may send and receive communication signals over the network 519. Signals received by antenna 516 through communication network 519 are input to receiver 512, which may perform such common receiver functions as signal amplification, frequency down conversion, filtering, channel selection and the like, and in the example system shown in FIG. 5, analog to digital (A/D) conversion. A/D conversion of a received signal allows more complex communication functions such as demodulation and decoding to be performed in the DSP 520. In a similar manner, signals to be transmitted are processed, including modulation and encoding for example, by DSP 520 and input to transmitter 514 for digital to analog conversion, frequency up conversion, filtering, amplification and transmission over the communication network 519 via antenna 518. DSP 520 not only processes communication signals, but also provides for receiver and transmitter control. For example, the gains applied to communication signals in receiver 512 and transmitter 514 may be adaptively controlled through automatic gain control algorithms implemented in DSP 520.

Mobile station 500 preferably includes a microprocessor 538 which controls the overall operation of the device. Communication functions, including at least data and voice communications, are performed through communication subsystem 511. Microprocessor 538 also interacts with further device subsystems such as the display 522, flash memory 524, random access memory (RAM) 526, auxiliary input/output (I/O) subsystems 528, serial port 530, keyboard 532, speaker 534, microphone 536, a short-range communications subsystem 540 and any other device subsystems generally designated as 542.

Some of the subsystems shown in FIG. 5 perform communication-related functions, whereas other subsystems may provide "resident" or on-device functions. Notably, some subsystems, such as keyboard 532 and display 522, for example, may be used for both communication-related functions, such as entering a text message for transmission over a communication network, and device-resident functions such as a calculator or task list.

Operating system software used by the microprocessor 538 is preferably stored in a persistent store such as flash memory 524, which may instead be a read-only memory (ROM) or similar storage element (not shown). Those skilled in the art will appreciate that the operating system, specific device applications, or parts thereof, may be temporarily loaded into a volatile memory such as RAM 526. Received communication signals may also be stored in RAM 526.

As shown, flash memory 524 can be segregated into different areas for both computer programs 558 and program data storage 550, 552, 554 and 556. These different storage types indicate that each program can allocate a portion of flash memory 524 for their own data storage requirements. Microprocessor 538, in addition to its operating system functions, preferably enables execution of software applications on the mobile station. A predetermined set of applications that control basic operations, including at least data and voice communication applications for example, will normally be installed on mobile station 500 during manufacturing. A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network 519. In a preferred embodiment, the PIM data items are seamlessly integrated, synchronized and updated, via the wireless network 519, with the mobile station user's corresponding data items stored or associated with a host computer system. Further applications may also be loaded onto the mobile station 500 through the network 519, an auxiliary I/O subsystem 528, serial port 530, short-range communications subsystem 540 or any other suitable subsystem 542, and installed by a user in the RAM 526 or preferably a nonvolatile store (not shown) for execution by the microprocessor 538. Such flexibility in application installation increases the functionality of the device and may provide enhanced on-device functions, communication-related functions, or both. For example, secure communication applications may enable electronic commerce functions and other such financial transactions to be performed using the mobile station 500.

In a data communication mode, a received signal such as a text message or web page download will be processed by the communication subsystem 511 and input to the microprocessor 538, which preferably further processes the received signal for output to the display 522, or alternatively to an auxiliary I/O device 528. A user of mobile station 500 may also compose data items such as email messages for example, using the keyboard 532, which is preferably a complete alphanumeric keyboard or telephone-type keypad, in conjunction with the display 522 and possibly an auxiliary I/O device 528. Such composed items may then be transmitted over a communication network through the communication subsystem 511.

For voice communications, overall operation of mobile station 500 is similar, except that received signals would preferably be output to a speaker 534 and signals for transmission would be generated by a microphone 536. Alternative voice or audio I/O subsystems, such as a voice message recording subsystem, may also be implemented on mobile station 500. Although voice or audio signal output is preferably accomplished primarily through the speaker 534, display 522 may also be used to provide an indication of the identity of a calling party, the duration of a voice call, or other voice call related information for example.

Serial port 530 in FIG. 5, would normally be implemented in a personal digital assistant (PDA)-type mobile station for which synchronization with a user's desktop computer (not shown) may be desirable, but is an optional device component. Such a port 530 would enable a user to set preferences through an external device or software application and would extend the capabilities of mobile station 500 by providing for information or software downloads to mobile station 500 other than through a wireless communication network. The alternate download path may for example be used to load an encryption key onto the device through a direct and thus reliable and trusted connection to thereby enable secure device communication.

Other communications subsystems 540, such as a short-range communications subsystem, is a further optional component which may provide for communication between mobile station 500 and different systems or devices, which need not necessarily be similar devices. For example, the subsystem 540 may include an infrared device and associated circuits and components or a Bluetooth™ communication module to provide for communication with similarly enabled systems and devices.

When mobile station 500 is used in conjunction with the techniques of FIGS. 1-4, the other device subsystems 542 and other components of mobile station 500 embody an apparatus and method of network-directed service status.

The above-described embodiments of the present invention are intended to be examples only of the invention. Those of ordinary skill in the art may envisage alterations, modifications and variations to the described embodiments which do not depart from the scope of the invention, as defined by the appended claims.

## Claims

1. A method of communicating over a wireless communications network with a mobile station (120), comprising the steps of:
(a) from the mobile station (120) receiving an origination request (212, 312), over the network, requesting a service with the network; and
(b) in response to the origination request (212, 312), transmitting to the mobile station (120) over the network a status message (223, 323) of a status of the requested service, said status message unambiguously identifying one of a grant of the requested service and a denial of the requested service and a reason for the denial of the requested service.

2. The method according to claim 1, wherein the status message is transmitted to the mobile station over a control channel of the network.

3. The method according to claim 2, wherein the communications network comprises a CDMA network, and the origination request receiving step comprises receiving the origination request from one of a dormant state (210) and an idle state (310) of the mobile station.

4. The method according to claim 3, wherein the origination request receiving step comprises receiving the origination request from the one state in response to a change in a network parameter (SID, NID, PID) detected at the mobile station.

5. The method according to claim 4, wherein the status message comprises a release order message having a service order qualifier, the service order qualifier identifying the reason for the service denial (223, 323).

6. A mobile station (120) for communicating over a wireless communications network, the mobile station including a service call state machine (200, 300) being configured to perform the steps of:
(a) facilitating transmission over the network of an origination request (212, 312) requesting a service with the network, by transitioning from an originating state (210, 310), from which the transmission is initiated, to a service state (220, 320) associated with the requested service;
(b) in the service state (220, 320), receiving over the network, in response to the origination request (212, 312), a status message of a status (223, 323) of the requested service, said status message unambiguously identifying one of a grant of the requested service and a denial of the requested service and a reason for the denial of the requested service; and
(c) transitioning from the service state (220, 320) to one of the originating state (210,310) and a null state (230, 330) in accordance with the received status message.

7. The mobile station according to claim 6, wherein the status message is received over a control channel of the network.

8. The mobile station according to claim 7, wherein the network comprises a CDMA network and the originating state comprises one of a dormant state (210) and an idle state (310).

9. The mobile station according to claim 8, wherein the state machine (200, 300) is configured to detect a change in a parameter (SID, NID, PID) of the network, and to facilitate the transmission from the one state in response to the detected change.

10. The mobile station according to claim 8, wherein the status message comprises a release order message having a service order qualifier, the service-order qualifier identifying the reason for the service denial (223, 323).

11. A method of communicating over a wireless communications network, comprising the steps of:
(a) from a mobile station (120) transmitting an origination request (212, 312), over the network, requesting a service with the network; and
(b) in response to the origination request (212, 312), receiving at the mobile station (120) over the network a status message (223, 323) of a status of the requested service; said status message unambiguously identifying one of a grant of the requested service and a denial of the requested service and a reason for the denial of the requested service.

12. The method according to claim 11, wherein the status message is received at the mobile station over a control channel of the network.

13. The method according to claim 12, wherein the communications network comprises a CDMA network, and the origination request transmitting step comprises transmitting the origination request from one of a dormant state (210) and an idle state (310) of the mobile station.

14. The method according to claim 13, wherein the origination request transmitting step comprises transmitting the origination request from the one state in response to a change in a network parameter (SID, NID, PID) detected at the mobile station.

15. The method according to claim 14, wherein the status message comprises a release order message having a service order qualifier, the service order qualifier identifying the reason for the service denial (223, 323).

16. A computer-readable medium carrying computer processing instructions which, when executed by a processing unit of a mobile station, cause the mobile station to perform the method according to any one of Claims 11 to 15.

## Patentansprüche

1. Verfahren zum Kommunizieren mit einer Mobilstation (120) über ein drahtloses Kommunikationsnetz, mit den folgenden Schritten:
(a) Empfangen einer Ursprungsanforderung (212, 312) von der Mobilstation (120) über das Netz, die einen Dienst mit Netz anfordert; und
(b) in Antwort auf die Ursprungsanforderung (212, 312), Senden einer Statusmeldung (223, 323) eines Status des angeforderten Dienstes über das Netz an die Mobilstation (120), wobei die Statusmeldung eindeutig eine Bewilligung des angeforderten Dienstes oder eine Ablehnung des angeforderten Dienstes und einen Grund für die Ablehnung des angeforderten Dienstes identifiziert.

2. Verfahren nach Anspruch 1, wobei die Statusmeldung an die Mobilstation über einen Steuerkanal des Netzes gesendet wird.

3. Verfahren nach Anspruch 2, wobei das Kommunikationsnetz ein CDMA-Netz umfasst und der Ursprungsanforderungs-Empfangsschritt das Empfangen der Ursprungsanforderung aus einem inaktiven Zustand (210) oder einem ruhenden Zustand (310) der Mobilstation umfasst.

4. Verfahren nach Anspruch 3, wobei der Ursprungsanforderungs-Empfangsschritt das Empfangen der Ursprungsanforderung aus dem einen Zustand in Antwort auf eine an der Mobilstation erfasste Änderung eines Netzparameters (SID, NID, PID) umfasst.

5. Verfahren nach Anspruch 4, wobei die Statusmeldung eine Freigabebefehlsmeldung mit einem Dienstbefehlqualifizierer umfasst, wobei der Dienstbefehlqualifizierer den Grund für die Dienstablehnung (223, 323) identifiziert.

6. Mobilstation (120) zum Kommunizieren über ein drahtloses Kommunikationsnetz, wobei die Mobilstation eine Dienstgespräch-Zustandsmaschine (200, 300) beinhaltet, die dazu konfiguriert ist, folgende Schritte durchzuführen:
(a) Erleichtern der Übertragung einer Ursprungsanforderung (212, 312) über das Netz, die einen Dienst mit dem Netz anfordert, durch Übergehen aus einem Ursprungszustand (210, 310), aus dem die Übertragung initiiert wird, in einen Dienstzustand (220, 320), die dem angeforderten Dienst zugeordnet ist;
(b) in dem Dienstzustand (220, 320), Empfangen einer Statusmeldung eines Status (223, 323) des angeforderten Dienstes über das Netz in Antwort auf die Ursprungsanforderung (212, 312), wobei die Statusmeldung eindeutig eine Bewilligung des angeforderten Dienstes oder eine Ablehnung des angeforderten Dienstes und einen Grund für die Ablehnung des angeforderten Dienstes identifiziert; und
(c) Übergehen aus dem Dienstzustand (220, 320) in den Ursprungszustand (210, 310) oder einen Nullzustand (230, 330) nach Maßgabe der empfangenen Statusmeldung.

7. Mobilstation nach Anspruch 6, wobei die Statusmeldung über einen Steuerkanal des Netzes empfangen wird.

8. Mobilstation nach Anspruch 7, wobei das Netz ein CDMA-Netz umfasst und der Ursprungszustand einen inaktiven Zustand (210) oder einen ruhenden Zustand (310) umfasst.

9. Mobilstation nach Anspruch 8, wobei die Zustandsmaschine (200, 300) dazu konfiguriert ist, eine Änderung eines Parameters (SID, NID, PID) des Netzes zu erfassen und die Übertragung von dem einen Zustand in Antwort auf die erfasste Änderung zu erleichtern.

10. Mobilstation nach Anspruch 8, wobei die Statusmeldung eine Freigabebefehlsmeldung mit einem Dienstbefehlqualifizierer umfasst, wobei der Dienstbefehlqualifizierer den Grund für die Dienstablehnung (223, 323) identifiziert.

11. Verfahren zum Kommunizieren über ein drahtloses Kommunikationsnetz, mit den folgenden Schritten:
(a) Senden einer Ursprungsanforderung (212, 312) von einer Mobilstation (120) über das Netz, wobei ein Dienst von dem Netz angefordert wird; und
(b) in Antwort auf die Ursprungsanforderung (212, 312), Empfangen einer Statusmeldung (223, 323) eines Status des angeforderten Dienstes über das Netz an der Mobilstation (120), wobei die Statusmeldung eindeutig eine Bewilligung des angeforderten Dienstes oder eine Ablehnung des angeforderten Dienstes und einen Grund für die Ablehnung des angeforderten Dienstes identifiziert.

12. Verfahren nach Anspruch 11, wobei die Statusmeldung an der Mobilstation über einen Steuerkanal des Netzes empfangen wird.

13. Verfahren nach Anspruch 12, wobei das Kommunikationsnetz ein CDMA-Netz umfasst und der Ursprungsanforderungs-Übertragungsschritt das Senden der Ursprungsanforderung aus einem inaktiven Zustand (210) oder einem ruhenden Zustand (310) der Mobilstation umfasst.

14. Verfahren nach Anspruch 13, wobei der Ursprungsanforderungs-Übertragungsschritt das Senden der Ursprungsanforderung von dem einen Zustand in Antwort auf eine an der Mobilstation erfasste Änderung eines Netzparameters (SID, NID, PID) umfasst.

15. Verfahren nach Anspruch 14, wobei die Statusmeldung eine Freigabebefehlsmeldung mit einem Dienstbefehlqualifizierer umfasst, wobei der Dienstbefehlqualifizierer den Grund für die Dienstablehnung (223, 323) identifiziert.

16. Computerlesbares Medium, das Computerverarbeitungsanweisungen trägt, welche, wenn sie von einer Verarbeitungseinheit einer Mobilstation ausgeführt werden, die Mobilstation veranlassen, das Verfahren nach irgendeinem der Ansprüche 11 bis 15 durchzuführen.

## Revendications

1. Procédé de communication avec une station mobile (120) sur un réseau de communication sans fil, comprenant les étapes consistant à :
(a) recevoir de la station mobile (120), via le réseau, une demande d'origine (212, 312) qui demande un service sur le réseau ; et
(b) en réponse à la demande d'origine (212, 312), émettre vers la station mobile (120), via le réseau, un message d'état (223, 323) indiquant un état du service demandé, ledit message d'état identifiant sans ambiguïté soit la délivrance du service demandé, soit le refus du service demandé et une raison pour le refus du service demandé.

2. Procédé selon la revendication 1, dans lequel le message d'état est émis vers la station mobile sur un canal de commande du réseau.

3. Procédé selon la revendication 2, dans lequel le réseau de communication est constitué d'un réseau AMRC et l'étape de réception de la demande d'origine comprend la réception de la demande d'origine à partir d'un état qui est soit un état de sommeil (210) soit un état d'attente (310) de la station mobile.

4. Procédé selon la revendication 3, dans lequel l'étape de réception de la demande d'origine comprend la réception de la demande d'origine à partir dudit un état constituant une réponse à un changement d'un paramètre du réseau (SID, NID, PID), détecté par la station mobile.

5. Procédé selon la revendication 4, dans lequel le message d'état comprend un message d'ordre de libération ayant un qualificateur d'ordre de service, le qualificateur d'ordre de service identifiant la raison du refus du service (223, 323).

6. Station mobile (120) destinée à communiquer sur un réseau de communication sans fil, la station mobile comprenant une machine à états finis (200, 300) d'appel de service configuré pour exécuter les étapes consistant à :
(a) faciliter l'émission sur le réseau d'une demande d'origine (212, 312), demandant un service auprès du réseau, en passant d'un état d'origine (210, 310), à partir duquel l'émission est lancée, à un état de service (220, 320) associé au service demandé ;
(b) dans l'état de service (220, 320), recevoir sur le réseau, en réponse à la demande d'origine (212, 312), un message d'état indiquant un état (223, 323) du service demandé, ledit message d'état identifiant sans ambiguïté soit la délivrance du service demandé, soit le refus du service demandé et une raison du refus du service demandé ; et
(c) passer de l'état de service (220, 320) à un état qui est soit l'état d'origine (210, 310), soit un état nul (230, 330), en fonction du message d'état reçu.

7. Station mobile selon la revendication 6, dans laquelle le message d'état est reçu sur un canal de commande du réseau.

8. Station mobile selon la revendication 7, dans laquelle le réseau de communication est constitué d'un réseau AMRC et l'état d'origine est un état qui est soit un état de sommeil (210) soit un état d'attente (310).

9. Station mobile selon la revendication 8, dans laquelle la machine à états finis (200, 300) est configuré pour détecter un changement d'un paramètre (SID, NID, PID) du réseau et pour faciliter l'émission à partir dudit un état, en réponse au changement détecté.

10. Station mobile selon la revendication 8, dans laquelle le message d'état comprend un message d'ordre de libération ayant un qualificateur d'ordre de service, le qualificateur d'ordre de service identifiant la raison du refus du service (223, 323).

11. Procédé de communication sur un réseau de communication sans fil, comprenant les étapes consistant à :
(a) émettre par la station mobile (120), via le réseau, une demande d'origine (212, 312) qui demande un service sur le réseau ; et
(b) en réponse à la demande d'origine (212, 312), recevoir sur la station mobile (120), via le réseau, un message d'état (223, 323) indiquant un état du service demandé, ledit message d'état identifiant sans ambiguïté soit la délivrance du service demandé, soit le refus du service demandé et une raison pour le refus du service demandé.

12. Procédé selon la revendication 11, dans lequel le message d'état est reçu par la station mobile sur un canal de commande du réseau.

13. Procédé selon la revendication 12, dans lequel le réseau de communication est constitué d'un réseau AMRC et l'étape d'émission de la demande d'origine comprend l'émission de la demande d'origine à partir d'un état qui est soit un état de sommeil (210), soit un état d'attente (310) de la station mobile.

14. Procédé selon la revendication 13, dans lequel l'étape d'émission de la demande d'origine comprend l'émission de la demande d'origine à partir dudit un état constituant une réponse à un changement d'un paramètre du réseau (SID, NID, PID), détecté par la station mobile.

15. Procédé selon la revendication 14, dans lequel le message d'état comprend un message d'ordre de libération ayant un qualificateur d'ordre de service, le qualificateur d'ordre de service identifiant la raison du refus du service (223, 323).

16. Support lisible par ordinateur portant des instructions de traitement informatique qui, lorsqu'elles sont exécutées par une unité de traitement d'une station mobile, commandent à la station mobile d'exécuter le procédé selon l'une quelconque des revendications 11 à 15.
